# EUROPEAN PATENT APPLICATION

(11) **EP 1 643 803 A2**
(43) Date of publication of application: **05.04.2006**
(21) Application number: 05108733.6
(22) Date of filing: 21.09.2005
(51) Int. Cl.: H04S 7/00, H04R 5/04, B60R 11/02

(54) **Automobile audio system**

(30) Priority: 01.10.2004 US 956831
(71) Applicant: BOSE CORPORATION, Framingham, Massachusetts 01701-9168 (US)
(72) Inventor: Torio, Guy A., Framingham, MA 01701-9168 (US); Holmi, Douglas J., Framingham, MA 01701-9168 (US); Ludwig, Christopher, Framingham, MA 01701-9168 (US); Stark, Michael W., Framingham, MA 01701-9168 (US); Miyazaki, Hiroshi, Framingham, MA 01701-9168 (US); Howard, Damian, Framingham, MA 01701-9168 (US)
(74) Representative: Brunner, Michael John

(57) **Abstract**

An audio system for a vehicle includes an audio source. A controller (21,22) modifies an audio signal from the audio source with one of a first and a second signal processing operation in response to a user input. The first signal processing operation configures the audio signal for listening inside the vehicle and the second signal processing operation configures the audio signal for listening outside the vehicle. A first plurality of transducers (24a-24d;26a,26b,28a,28b,29) is driven by the audio signal that is configured for listening inside the vehicle by the first signal processing operation. A second plurality of transducers (28a,28b,29) is driven by the audio signal that is configured for listening outside the vehicle by the second signal processing operation.

## Description

### BACKGROUND

Audio systems are included in virtually every automobile manufactured today. These audio systems are typically designed for use while the doors, tailgates, and other openings to the passenger compartment are closed. However, people often choose to listen to their automobile audio system while they are outside of their vehicle, such as while they are camping or "tailgating" at a sporting event. Because traditional automobile audio systems are not designed for this type of use, listeners may not enjoy as high a quality sound presentation as they could if the system were designed for outdoor use.

The acoustic characteristics of a typical vehicle with all of its doors closed will generally be significantly different than the acoustic characteristics of the same vehicle with its tailgate (or one of its doors) open. For example, the linear transfer function from each transducer element to various listening locations will be markedly different in each circumstance. Furthermore, opening or closing of the tailgate significantly alters the acoustic characteristics of the cabin space.

### SUMMARY

In one aspect, the invention is embodied in an audio system for a vehicle. The audio system includes an audio source that generates an audio signal. A controller is coupled to the audio source and modifies the audio signal with one of a first and a second signal processing operation in response to a user input. The first signal processing operation configures the audio signal for listening inside the vehicle and the second signal processing operation configures the audio signal for listening outside the vehicle. A first plurality of transducers is coupled to the controller. The first plurality of transducers is driven by the audio signal that is configured for listening inside the vehicle by the first signal processing operation. A second plurality of transducers is coupled to the controller. The second plurality of transducers is driven by the audio signal that is configured for listening outside the vehicle by the second signal processing operation.

In one embodiment, at least one of the transducers in the second plurality of transducers is positioned in a location that is external to a passenger compartment of the vehicle. For example, the transducer can be mounted to a body panel or mounted to a storage bin that is mechanically coupled to the vehicle.

The first and the second plurality of transducers can include at least one common transducer or different transducers. The first and the second plurality of transducers can also include different sets of transducers. The audio system can also include a visual indicator that indicates that the audio signal is driving the second plurality of transducers. The visual indicator can include a brake light, a lamp, a light emitting diode (LED), a strobe, a parking light, a directional light, and a reverse light.

In one embodiment, the first signal processing operation includes a different equalization parameter than the second signal processing operation. The first and/or the second signal processing operations can substantially attenuate the audio signal before it is coupled to one or more of the transducers in the first and the second plurality of transducers.

In one embodiment, the controller includes an amplifier. The amplifier can control at least one of a gain and an equalization of the audio signal. The controller can also be integrated with the audio source. The controller can be coupled to the audio source through a GPIO bus, a RS232 bus, a SCSI bus, a serial bus, a parallel bus, a fibre channel bus, an optical bus, a CAN bus, or a MOST bus.

The audio source can include an auxiliary input terminal for coupling an auxiliary device to the audio source. The auxiliary device can include a radio, a television, a XM tuner, a SAT tuner, a CD player, a DVD player, a cassette player, a MP3 player, a MD player, a hard drive, a PDA, a video player, a portable audio player, a microphone, and a musical instrument. A visual indicator can indicate that the auxiliary device is coupled to the audio source.

In one embodiment, the user input includes operating a switch. The switch can be a manual switch, an automatic switch, a sensor, a remote control switch, a switch that is integrated with the audio source, and a switch that is integrated with the controller. The user input could also include opening at least one of a door, a window, a tailgate, a hatch, a moon roof, a sunroof, a trunk, and a storage bin on the vehicle.

The audio source can include an AM tuner, an FM tuner, a TV tuner, a XM tuner, a SAT tuner, a CD player, a DVD player, a cassette player, a MP3 player, a MD player, a video player, and/or a hard drive. In one embodiment, a video display is coupled to the audio source. The video display can be configured to direct a video image outside the vehicle. The video display can include a liquid crystal display (LCD), a light emitting diode (LED) display, a plasma display, a projection display, and a cathode ray tube (CRT) display.

The audio signal can include a stereo audio signal, a matrix surround sound audio signal, a 5.1 surround sound audio signal, a 6.1 surround sound audio signal, a 7.1 surround sound audio signal, and/or a two-channel down-mixed audio signal. One of the first and the second plurality of transducers can include a pair of transducers and the audio source can provide complete surround information to the pair of transducers. The surround information is mixed prior to being provided to the pair of transducers.

The audio system also includes a remote control receiver. The remote control receiver is coupled to a remote control sensor that is located in a tail light assembly on the vehicle. The remote control receiver can be an infrared (IR) receiver or a radio-frequency (RF) receiver. The remote control receiver can be disabled when the vehicle is in motion. To determine the status of the vehicle, a sensor can be coupled to a tachometer in the vehicle. The sensor can detect a state of the engine in the vehicle. Another sensor can be coupled to a parking brake in the vehicle. That sensor can detect a state of the parking brake in the vehicle. In one embodiment, audio source determines a status of the vehicle from a vehicle communication bus. The system can also include a battery monitor that monitors a state of a battery in the vehicle.

A remote control transmitter can communicate with the remote control receiver. The remote control transmitter can have a unique transmitter signal. The remote control transmitter can control a door lock, a vehicle ignition, a window, a power door, a power seat, a power moon roof, a trunk lid, a communication system, a courtesy light, and/or a vehicle alarm in the vehicle. Additionally, the remote control transmitter can control a system configuration, a source selection, a volume, an equalization function, a tuning function, a band selection, a track selection, a seek function, a scan function, a fast forward function, a rewind function, a skip forward function, a skip back function, a fader function, and/or a balance function of the audio source. The remote control transmitter can also control a garage door opener, an electric gate, a light, an appliance, and/or a home security system.

In another aspect, the invention is embodied in a method for operating an audio system in a vehicle. The method includes generating an audio signal. The method also includes modifying the audio signal with one of a first and a second signal processing operation in response to a user input. The first signal processing operation configures the audio signal for listening inside the vehicle and the second signal processing operation configures the audio signal for listening outside the vehicle. The method includes transducing the audio signal that is configured for listening inside the vehicle with a first plurality of transducers. The method further includes transducing the audio signal that is configured for listening outside the vehicle with a second plurality of transducers.

The first and the second plurality of transducers can include at least one common transducer. The method can include visually indicating when the audio signal is transmitted to the second plurality of transducers. The method can also include changing an equalization parameter in the audio signal in response to at least one of the first and the second signal processing operations. The method can also include remotely controlling the audio system. In one embodiment, the method includes coupling an auxiliary device to the audio system and visually indicating when the auxiliary device is coupled to the audio source.

The method can also include providing complete surround information to a pair of transducers in either the first or the second plurality of transducers. The surround information can be mixed prior to providing the surround information to the pair of transducers.

The user input can include opening at least one of a door, a window, a tailgate, a hatch, a moon roof, a sunroof, a trunk, and a storage bin on the vehicle. The user input can include operating a switch. The method can also include remotely controlling a door lock, a vehicle ignition, an air conditioner, a heater, a defroster, trunk lid, a communication system, a window, a power door, a power seat, a power moon roof, a courtesy light, and/or a vehicle alarm in the vehicle. The method can also include remotely controlling a system configuration, a source selection, a volume, an equalization function, a tuning function, a band selection, a track selection, a seek function, a scan function, a fast forward function, a rewind function, a skip forward function, a skip back function, a fader function, and/or a balance function of the audio system.

In one aspect, the invention is embodied in an audio system for a vehicle. The audio system includes an audio source that generates an audio signal. The audio source is integrated with the vehicle. The audio system also includes a remote control receiver that controls a function of the audio source. Also includes is a remote control sensor that receives a signal from a remote control transmitter to direct the remote control receiver to control the function of the audio source. The remote control sensor is positioned in a location that is external to the passenger compartment of the vehicle.

The remote control sensor can be mounted in an exterior light assembly of the vehicle. The exterior light assembly can be a left tail light assembly, a right tail light assembly, a left directional light assembly, a right directional light assembly, a parking light assembly, a reverse light assembly, a license plate illuminator assembly, a high-level brake light assembly, a courtesy light assembly, a running light assembly, a head light assembly, and/or a fog light assembly. The exterior light assembly can include a curved reflector that focuses the signal from the remote control transmitter. The remote control sensor can be an infrared (IR) sensor or a radio-frequency (RF) sensor. The remote control sensor can be mounted to a body panel of the vehicle.

The function can include a system configuration selection, a source selection, a volume, an equalization function, a tuning function, a band selection, a track selection, a seek function, a scan function, a fast forward function, a rewind function, a skip forward function, a skip back function, a fader function, and a balance function of the audio source. The remote control transmitter can control a door lock, a vehicle ignition, a heater, an air conditioner, a defroster, a window, a power door, a power seat, a power moon roof, a convertible top, a courtesy light, vehicle telematics, a communication system, a trunk lid, a suspension load leveling system, and/or a vehicle alarm in the vehicle. The remote control receiver can be disabled when the vehicle is in motion.

In another aspect, the invention is embodied in an apparatus for controlling an electrical component in a vehicle. The apparatus includes a remote control receiver that is coupled to the electrical component in the vehicle and a remote control sensor that is coupled to the remote control receiver. The remote control sensor is mounted in a light assembly and at least a portion of the light assembly is positioned on the exterior of the vehicle. A remote control transmitter communicates a control signal to the remote control sensor. The remote control receiver controls the electrical component in response to receiving the control signal from the remote control sensor.

The remote control sensor can be an infrared (IR) sensor or a radio-frequency (RF) sensor. The light assembly can include a left tail light assembly, a right tail light assembly, a left directional light assembly, a right directional light assembly, a parking light assembly, a reverse light assembly, a license plate illuminator assembly, a high-level brake light assembly, a courtesy light assembly, a running light assembly, a head light assembly, and/or a fog light assembly.

The electrical component can include an audio system, a door lock, a vehicle ignition, a heater, an air conditioner, a defroster, a window, a power door, a power seat, a power moon roof, a convertible top, a courtesy light, vehicle telematics, a communication system, a trunk lid, a suspension load leveling system and/or a vehicle alarm.

The remote control transmitter can control a function of an audio system in the vehicle. The function can include a system configuration selection, a source selection, a volume, an equalization function, a tuning function, a band selection, a track selection, a seek function, a scan function, a fast forward function, a rewind function, a skip forward function, a skip back function, a fader function, and/or a balance function of the audio system.

### BRIEF DESCRIPTION OF THE DRAWINGS

The above and further advantages of this invention may be better understood by referring to the following description in conjunction with the accompanying drawings, in which like numerals indicate like structural elements and features in various figures. The drawings are not necessarily to scale, emphasis instead being placed upon illustrating the principles of the invention.

FIG. 1A is a top view of an automobile having a dual-mode audio system.

FIG. 1B is a top view of an automobile having another dual mode audio system.

FIG. 2A is a flow-chart illustrating the operation of a mode detection process in a dual-mode audio system.

FIG. 2B is a flow-chart illustrating the operation of a mode detection process in a tri-mode audio system.

FIG. 3 is a flow-chart illustrating the operation of a battery monitoring process in a dual-mode audio system.

FIG. 4 is a diagram of a sport utility vehicle having a rear set of controls and rear transducers mounted on its tailgate.

FIG. 5A-D are side views of an automobile having rear transducers mounted in four different locations.

FIG. 6 illustrates a block diagram of an audio system according to the invention.

F1G. 7 illustrates a perspective view of a vehicle including an embodiment of the audio system of FIG. 6.

FIG. 8 illustrates a side view of a vehicle including an embodiment of the audio system of FIG. 6.

### DETAILED DESCRIPTION

A vehicle audio system, according to one aspect of the invention, is able to operate in two modes: one mode where one or more parameters of the audio system are configured to better optimize sound quality while the doors (e.g., including tailgates in sport utility vehicles, vans and pick-up trucks and hatches in hatch-backed vehicles) are closed and a second mode where one or more parameters of the audio system are configured to better optimize sound quality while one or more of the doors, such as a tailgate, are open.

Additionally, users can operate the automobile audio system while the engine is not running and thus, drain power from the vehicle's battery. It is therefore desirable for a vehicle audio system to monitor one or more operating conditions of the battery and adjust system performance in order to extend the maximum period of time the audio system can operate from battery power. It is also desirable to monitor one or more operating conditions of the battery to ensure operation of the audio system does not result in a condition where sufficient battery charge (to allow the vehicle to be restarted) is no longer available.

It should be noted that the terms automobile and vehicle are used synonymously in this description and refer to any self-propelled passenger vehicle used for land transport, including cars, trucks, pick-up trucks, sport utility vehicles, and the like. Additionally, the term tailgate refers to a hinged door of a vehicle which provides access to a rear opening of the vehicle or provides access to a cargo area. A tailgate may be hingedly connected to the top, bottom, or side of the frame of the vehicle.

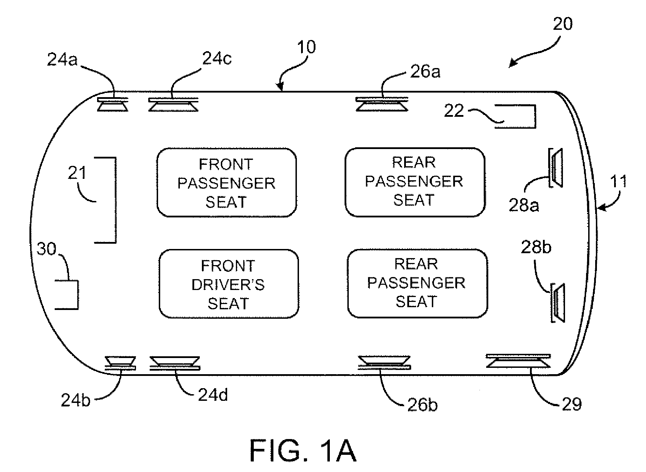

As shown in FIG. 1A, a vehicle (e.g., an SUV) 10 includes an audio system 20 that is configured to operate in two modes: a conventional mode and an open mode.

The audio system includes a first system configuration and a second system configuration. The first system configuration corresponds to the conventional mode. The conventional mode is a mode of operation in which audio system 20 is configured for play when all of the doors of the vehicle are closed and the primary listening position of interest is the seating area within the passenger compartment. In this mode, sound is radiated within the passenger compartment as in a conventional automobile audio system. The conventional mode includes a first plurality of transducers that are positioned to radiate sound for listening inside the vehicle.

The second configuration corresponds to the open mode or the tailgate mode. The open mode is a mode of operation in which audio system 20 is configured for play when the tailgate 11 is open. In this mode, sound is radiated through the open tailgate and/or through the vehicle's body panels or other openings to the outside environment. In one embodiment, a second plurality of transducers is located in the rear portion of the vehicle, such as on the tailgate, hatch, or rear door. The second plurality of transducers can also be located in the bed or the liner of a pick-up truck, for example. The open mode includes the second plurality of transducers that are positioned to radiate sound for listening outside the vehicle. In one embodiment, the first and second plurality of transducers can include one or more common transducers.

The primary listening position of interest in the open mode is outside of the vehicle, typically in line with the open tailgate 11. In other embodiments, the open mode of operation can be configured for play when one or more doors (including a tailgate) are open. In some embodiments, the open mode of operation can be configured to operate when a window, a tailgate, a hatch, a moon roof, a sunroof, a trunk, and a storage bin on the vehicle are in an open position.

Because the acoustic characteristics of the vehicle are significantly different when all of the doors are closed versus when one or more doors are opened, and because the listening positions of primary concern are different in the different modes, the audio system 20 adjusts system configuration in order to better optimize performance in each mode. As will be explained in greater detail below, adjustment of system configuration may include altering the system topology for each mode of operation, as well as performing different signal processing operations such as equalization, signal mixing, amplification, dynamic range control, spatial enhancement processes and other signal processing techniques on the channels of audio data in each mode of operation. The system topology defines how different signals provided by an audio source are routed to the different transducers of the audio system.

Additionally, audio system 20 features a battery monitoring process which monitors one or more operating conditions of the automobile battery 30 and takes one or more actions based on whether the system 20 is primarily running off of the battery and the state of one or more of the monitored operating conditions. As will be explained in greater detail below, the battery monitoring process takes various actions including triggering an alarm and altering the system configuration in order to conserve battery power.

Referring again to FIG. 1A, audio system 20 includes one or more audio sources (not shown) such as a stereo radio, CD player, DVD player, and/or an MP3 player, which may be mounted in or near a front control console 21, a rear control console 22, or at another location within the automobile 10. The front and rear control consoles 21, 22 each may contain a set of controls (e.g., volume, source selection, track selection, play, pause, etc.) for the audio sources included within the system 20.

The audio system 20 also includes two pairs of front transducers 24a-24b, 24c-24d, a pair of side transducers 26a-26b, a pair of rear transducers 28a-28b, and a woofer 29. For example, a first plurality of transducers corresponding to the first system configuration can include the two pairs of front transducers 24a-24b, 24c-24d, the pair of side transducers 26a-26b, the pair of rear transducers 28a-28b, and the woofer 29. A second plurality of transducers corresponding to the second system configuration can include the pair of rear transducers 28a-28b, and the woofer 29. However, any combination of transducers can be included in the first and/or the second system configurations.

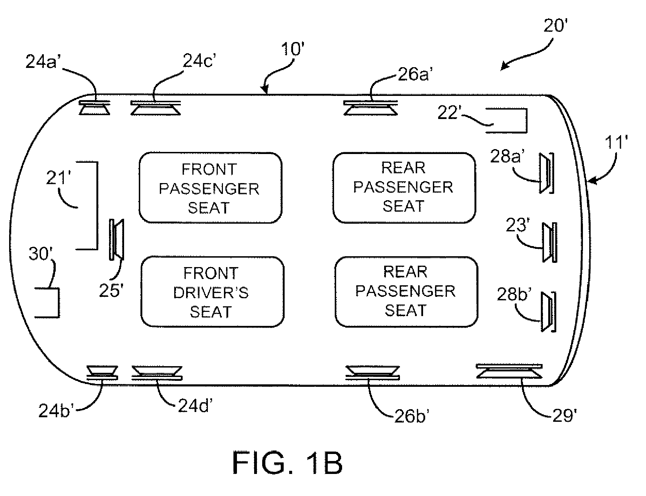

It should be noted that the arrangement of elements including the transducers, as well as the number of elements shown in FIG. 1A, were chosen to illustrate the novel features of the invention. It should be understood that the invention is not limited to use of the particular configuration of transducers and placements shown. For example, as shown in FIG. 1B, another dual-mode audio system 20' can include the same transducers shown in FIG. 1A as well as a front center transducer 25' located proximate to the front console 21 or in the dashboard of the vehicle 10' and a rear center transducer 23' located proximate to the rear of the vehicle 10'. The audio systems 20, 20' of FIG. 1A and FIG. 1B can be configured as surround sound audio systems. The surround sound audio system can be a matrix surround sound system, a 5.1 surround sound system, a 6.1 surround sound system, a 7.1 surround sound system, and a two-channel down-mixed surround sound system.

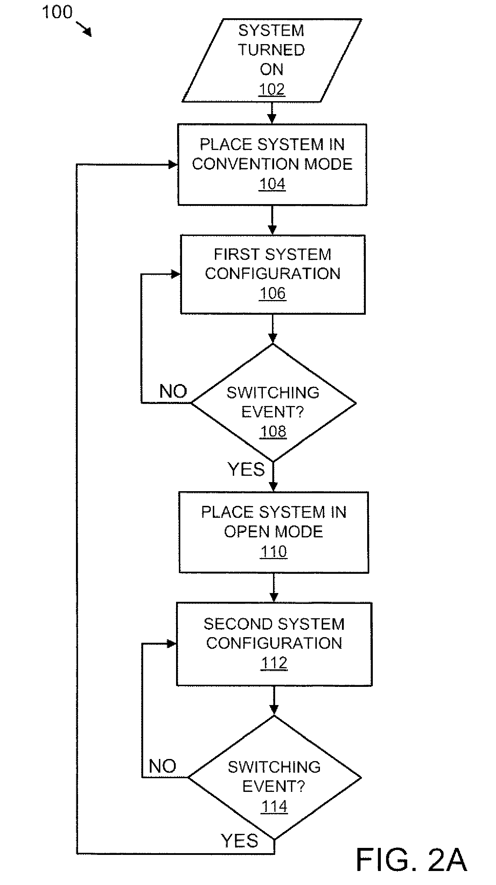

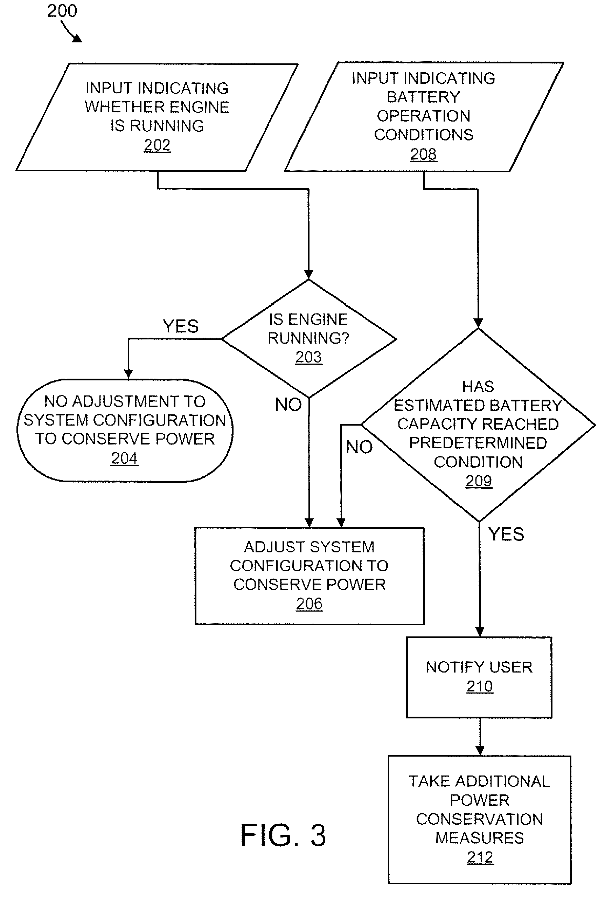

FIG. 2A and FIG. 3 illustrate an operation of the audio system 20 shown in FIG. 1A.

As shown in FIG. 2A, the audio system 20 includes a mode detection process 100 which detects when the system 20 is activated 102 and when a switching event 108, 114 occurs that switches the system 20 between the first system configuration and the second system configuration. A switching event 108, 114 occurs when a user changes the state of a switch provided within the system 20. One or more manual switches may be located on the front control panel 21 (shown in FIG. 1A), rear control panel 22, on a remote control device, on a key fob, or in another location. Since it is possible that significant changes would be made in system operation when the mode is changed, having a manual switch keeps from dramatically changing system operation while passengers remain inside the vehicle.

In other embodiments, a switching event may occur automatically. For example, a switching event may occur automatically when the system detects that a tailgate or door is open and the vehicle engine is not running (which can be sensed by the state of the ignition interlock, the RPM of the engine, or some other means). It may also be desirable to sense if passengers remain in the vehicle cabin, which could be done using seat switches, ultrasonic motion detectors, or some other method. Thus, in other embodiments, the system may automatically switch modes from the conventional mode to the open mode when the tailgate or door is open, the engine is off, and no passengers are occupying the vehicle cabin.

Referring again to FIG. 2A, when the mode detection process 100 detects that the system 20 has been turned on 102, the process 100 will place the system 20 in a conventional mode of operation 104. By automatically reverting to a conventional mode when the system 20 is turned on, the system 20 avoids a situation where the driver gets into the vehicle and turns on the system after it had been switched to open mode. However, in other embodiments, a mode detection process in a dual-mode audio system could be configured to start up in different modes depending on how the system was turned on or the state of a switch. For example, if the system was turned on using controls mounted in the front of the vehicle, the system may assume that someone would be inside the vehicle and the system should start in conventional mode. If the system were turned on using controls that were easily accessible from outside the vehicle (such as controls located in rear console 22, or controls located on a remote control), the system may be configured to start up in open mode.

When the system 20 is placed in the conventional mode of operation 104, the system 20 is in a first system configuration 106 which, as will be explained in more detail below, has a first system topology and performs a first set of signal processing operations which are configured for play with the doors of the vehicle closed and the primary listening position is within the passenger's compartment. The system 20 remains in its first system configuration 106 until a switching event is detected 108.

If a switching event is detected 108, mode detection process 100 places the system in the open mode of operation 110 and the system 20 is changed over to a second system configuration 112 which has a second system topology and performs a second set of signal processing operations that is configured for play with the tailgate of the vehicle opened and the primarily listening position being outside of the vehicle. In one embodiment, the position is proximate to a rear opening of the vehicle. In another embodiment, the position is proximate to a side opening of the vehicle.

If another switching event 114 is detected, then the mode detection process 100 reverts the system 20 back to the conventional mode of operation 104 and the system is placed in the first system configuration 106.

In each system configuration, 106, 112, the system 20 has a certain system topology which defines how different signals provided by an audio source are routed to the various transducers in the system. In the first system configuration 106, the system topology is arranged in order to better optimize the system for play with the doors of the automobile closed and the primary listening area is inside the passenger compartment of the vehicle. Similarly, in the second system configuration 112, the system topology is arranged in order to better optimize the system for play with a window, door, moon roof, or rear tailgate opened and the primary listening position outside the vehicle near the opening. For example, in an audio system 20 having a transducer configuration similar to the arrangement in FIG. 1 A and an audio source which produces 5.1 channels of audio data (i.e., front left, front right, front center, left surround, and right surround of full bandwidth (20-20kHz) audio data plus a sixth channel of low frequency audio data), the first and second system configuration 106, 112 can have a system topology as shown in Table I.

**Table I**

| Audio Data | System Topology in Conventional Mode (i.e., transducers (shown in FIG. 1A) which receive audio data in the Conventional mode) | System Topology in Open Mode (i.e., transducers (shown in FIG. 1A) which receive audio data in the Open mode) |
|---|---|---|
| Front left audio data | Front left transducers 24b, 24d | Rear left transducer 28b |
| Front right audio data | Front right transducers 24a, 24c | Rear right transducer 28a |
| Front center data | Provided equally to front left and right transducers 24a-24d | Provided equally to rear left and rear right transducers 28a-28b |
| Left Surround audio data | Side left transducer 26b and rear left transducer 28b | Side left transducer 26b and front left transducers 24a, 24d |
| Right Surround audio data | Side right transducer 26a and rear right transducer 28a | Side right transducer 26a and front right transducers 24a, 24c |
| Low Frequency data (i.e., the .1 channel) | Subwoofer transducer 29 | Subwoofer transducer 29 |

In other separate embodiments, many other transducer arrangements and routing of audio data are possible. For example, an audio system may have a transducer arrangement as shown in FIG. 1B and may have an audio source which produces 6.1 channels of audio data including a front left, front right, front center, left surround, right surround, and center surround of full bandwidth (20-20kHz) of audio data plus a sixth channel of low frequency audio data. In this example, the system configuration 106, 112 may have the system topology as shown in Table II.

**Table II**

| Audio Data | System Topology in Conventional Mode (i.e., transducers (shown in FIG. 1B) which receive audio data in the Conventional mode) | System Topology in Open Mode (i.e., transducers (shown in FIG. 1B) which receive audio data in the Open mode) |
|---|---|---|
| Front left audio data | Front left transducers 24b, 24d | Rear left transducer 28b |
| Front right audio data | Front right transducers 24a, 24c | Rear right transducer 28a |
| Front center data | Front center transducer 25 | Rear center transducer 23 |
| Left Surround audio data | Side left transducer 26b and rear left transducer 28b | Side left transducer 26b and front left transducers 24a, 24d |
| Right Surround audio data | Side right transducer 26a and rear right transducer 28a | Side right transducer 26a and front right transducers 24a, 24c |
| Center Surround audio data | Center rear transducer 23 | Center front transducer 25 |
| Low Frequency data (i.e., the .1 channel) | Subwoofer transducer 29 | Subwoofer transducer 29 |

In other embodiments, a system configuration may include a topology in which one or more transducers are shut off in different modes of operation. For example, referring again to FIG. 1A, the front left and right transducers 24a-24d may be shut off in the open mode of play leaving the side transducers to output left and right surround sound. Alternatively, the side transducers may be shut off in the open mode, leaving the front transducers to output the left and right surround sound. Similarly, the rear transducers 28a-28b may be shut off in the conventional mode leaving the side transducers to output the surround sound.

Other embodiments may shut off front transducers 24a-24d (shown in FIG. 1A) and side transducers 26a-26b in open mode. In this arrangement, left, right and center surround signals would be mixed with the left, right and center front signals that are fed to transducers 28a-28b.

In some embodiments, the audio source can provide complete surround information to the rear right 28a and the rear left transducers 28b. In one embodiment, the audio source is a DVD source and a digital video disk (DVD) includes a two-channel down-mixed audio track that is fed to the rear right 28a and the rear left transducers 28b. Alternatively, the audio source can down-mix the surround information into two channels that are fed to the rear right 28a and the rear left transducers 28b.

In addition to changing the system topology in each mode of operation, the first and second system configuration 106, 112 can also perform different signal processing operations in each mode. Signal processing operations may include operations such as equalization, amplification, signal mixing, spatial enhancement, dynamic range control and other signal processing techniques on one or more channels of audio data in order to alter the frequency response (both magnitude and phase as a function of frequency), polarity, and the magnitude of the voltage level of the signals delivered to each of the transducer channels in each the mode of operation.

The first and second system configurations 106, 112, may perform different equalization signal processing operations in order to provide for a different frequency response of the system 20 in each mode of operation. Equalization signal processing may be performed using any of the various techniques known in the art. For example, equalization signal processing may be performed on each channel of audio data by passing the data through one or more digital filters whose filter coefficients are stored in memory and provided to the digital signal processor. Sets of filter coefficients corresponding to each mode of operation would be stored in memory, and the system could switch sets of coefficients according to commands issued by the mode detection process 100 (FIG. 2A).

Equalization processing operations may also be implemented in the analog domain by providing physically separate circuits with separate sets of filters for each mode of operation. Different circuits would be switched into or out of the signal path in accordance with commands issued by the mode control process 100. Alternatively, there may be one physical circuit in which the performance can be dynamically adjusted through use of variable gain circuits, voltage controlled filters, switchable electrical component values, switched capacitor filters, or any other form of adjustable or programmable analog filters or signal processors.

Equalization signal processing operations, whether implemented in the digital or analog domain, should be designed to provide a smoother frequency response of the audio system in each mode of play as compared to the frequency response of the system with no equalization. Furthermore, the frequency response of the system measured at the desired listening position for the open mode of operation (outside of the vehicle in line with the open door or tailgate) should be smoother using the signal processing designed for operation in the open mode than the response would be if the conventional mode signal processing were used. For each mode of operation, the overall measured frequency response of the system measured at each desired listening position will generally be similar in character. However, the frequency response of the signal processing used for each mode will generally be significantly different. For purposes of discussion, it should be noted that we will sometimes refer to signal processing used for equalization as a 'channel of equalization' in this specification. The channel of equalization may be accomplished using either analog or digital techniques. We will also sometimes refer to the frequency response of the signal processing as the 'frequency response of the channel of equalization'.

First and second system configurations 106, 112, may include different amplification processing operations of the audio signals applied to a transducer for each mode of operation. In other words, the first system configuration 106 may include signal processing operations which adjust the amplification of the audio signals in one manner, and the second system configuration may include signal processing operations which adjust the amplification of the audio signals in a different manner. Adjusting the amplification of the audio signals may be performed using any of the techniques known in the art. Adjusting gain can be done in multiple places within the signal path of an audio signal, and the system is not limited in the locations where gain adjustment occurs. For example, the amplification of an audio signal applied to a transducer may be adjusted by changing the gain of an amplifier in the signal path of a particular transducer. In a digital system, the gain for each channel for each mode of operation may be determined by a multiplication coefficient or set of filter coefficients stored in memory and supplied to a digital signal processor in order to control the level of the signal supplied to one or more transducers in each mode of operation. The gain may also be adjusted in the analog domain by controlling a variable gain analog amplifier (or other known methods of controlling gain in an analog system) located in the signal path of each channel of audio data.

The first and second system configurations 106, 112 may perform different signal mixing signal processing functions in each mode of operation. Signal mixing operations involve summing various signals together in various proportions. Mixing may occur in one or both modes of operation. Summing can be accomplished using op amp summer circuitry in the analog domain, or data values can be directly summed by a microprocessor or digital signal processor.

The first and second system configuration 106, 112 may include different spatial enhancement signal processing in each mode of operation. Spatial enhancement signal processing generally improves the spatial character of the sound field created by the system and may be implemented using any of the techniques known in the art. One spatial enhancement technique for two-channel audio involves determining first sum and difference signals by alternately adding and subtracting first and second signals from each other (hereinafter referred to as a matrix operation). Next, some form of signal processing is applied at least to the difference signal (or possibly to both the sum and difference signals, where the processing applied to the sum and difference signals is different), then a second matrix operation (take sum and difference of processed sum and difference signals) is performed to generate third and fourth signals. These third and fourth signals are now spatially enhanced versions of the first and second signals. Other enhancement techniques might only operate on a difference signal. In these methods, a difference of two signals is taken. The difference signal is modified in some manner, then added back to one of the original channels and subtracted from the other of the original channels.

In the open mode of operation, spatial enhancement may be performed on the signals provided to the rear transducers (e.g., transducers 28a-28b in FIG. 1A) since these transducers will most likely be the primary transducers providing sound to listeners outside the vehicle. Spatial enhancement may be performed on the complete signals applied to the rear transducers, or may be applied to only a portion of the signals applied to the rear transducers. For example, for reproduction of a surround sound signal source, center channel information may be applied to each rear transducer equally, without any spatial enhancement processing. Simultaneously, left and right channel signals may be applied to left and right transducers respectively. These could be applied with or without spatial enhancement processing. Similarly, left and right surround signals could be applied with or without spatial enhancement processing to left and right transducers respectively, where the spatial enhancement processing used could either be the same as or different from that applied to the left and right channel signals. In one particular embodiment, the second configuration feeds center channel signals equally to rear transducers 28a-28b (shown in FIG. 1A) without spatial enhancement, front left and right signals to left and right rear transducers 28a-28b respectively without spatial enhancement, and spatially enhanced left and right surround signals to left and right rear transducers 28a-28b, respectively.

Other combinations of performing spatial enhancement processing of various signals are also possible. For example, a system such as that described in co-pending application titled "Audio Signal Processing" having U.S. Serial Number 09/886,868 filed on June 21, 2001 and assigned to Bose® Corporation, which is herein incorporated by reference, could be used in the rear of the vehicle, where spatial enhancement processing is used with the configuration of transducers disclosed.

It should be understood that spatial enhancement is not limited to the second system configuration during the open mode of operation, but may also be performed on the audio signals provided to one or more sets of transducers (e.g., the front sets of transducers 24a-24b, 24c-24d or rear sets of transducers 26 a-b, 28 a-b shown in FIG. 1A) in first system configuration during the conventional mode of operation.

It should be noted that other signal processing operations which affect system functions or performance attributes may change in the conventional and open mode of operation. For example, the dynamic range of the audio signal supplied to one or more transducers may be changed depending on the mode of operation. Additionally, balance/fade settings may be changed depending on the operation (e.g., fade control may be shut off or set to some fixed position in the open mode).

Equalization processes, amplification, spatial enhancement, signal mixing, dynamic range adjustment, and other signal processes may take place in either the digital domain with a device such as digital signal processor, microprocessor, digital amplifier, or other suitable digital device, or in the analog domain with separate physical circuits or a single physical circuit with dynamically adjustable elements (e.g., variable gain amplifiers, voltage controlled filters, etc.).

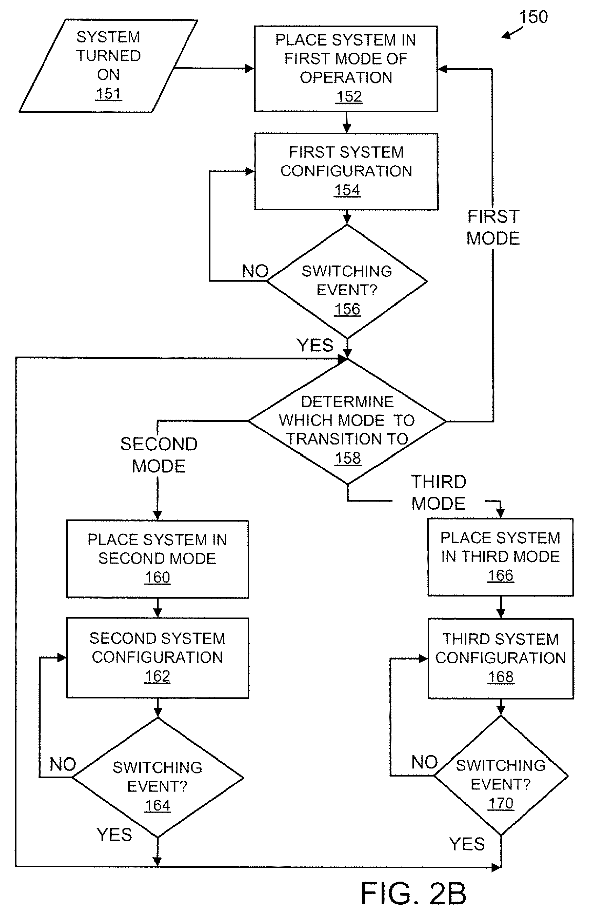

Additionally, while a dual-mode audio system is illustrated in FIG. 2A, the concept may be extended to audio systems which operate in three or more modes of operation. For example, as shown in FIG. 2B, when the mode detection process 150 detects that the system 20 has been turned on 151, the process 150 will place the system 20 in a first mode of operation 152. The audio system may have a first system configuration 154 (with a first topology and a first set of signal processing operations) in a conventional mode when all of the doors of the vehicle are closed, a second system configuration 162 (with a second topology and second set of signal processing operations) when one of the doors (e.g., a tailgate only) are open, and a third system configuration 168 (with a third topology and a third set signal processing operations) when a different door (e.g., a side door) is open.

When the first switching event occurs 156, the mode detection process 150 determines which mode of operation the system should transition to 158. The next mode of operation 152, 160, 166 is determined based on the state of a switch and/or the state of one or more physical conditions of the automobile (e.g., whether doors are opened/closed, engine is off/running, passenger in/out of driver's seat, etc.) and modifies the audio data accordingly. When another switching event occurs 156, 164, 170, the mode detection process 150 determines the next mode of operation 152, 160, 166.

As shown in FIG. 3, audio system 20 also may include a battery monitoring process 200 which may receive input 202 from the automobile 10 that indicates whether the engine of the automobile is running, which tells the audio system whether the primary power supply is the automobile's battery or another power source such as an alternator. Numerous possible signals could be provided to indicate whether or not the engine is running, such as a tachometer signal indicating the RPM of the engine (i.e., if RPM is zero, then the engine is not running and power is being drawn primarily from the battery), a signal indicating the state of the ignition lock (i.e., if the ignition is locked then the automobile is not running), or any of a number of digital signals that may be available on a communications bus which may be included in a vehicle electrical system.

If the battery condition monitoring process 200 detects that the engine is running 203 (and thus power is not being primarily drawn from the battery), then there is no adjustment to the system configuration in order to conserve battery power 204.

When the battery condition monitoring process 200 detects that the engine is not running 203 (and thus power is being primarily drawn from the battery), the system 20 may adjust system configuration (i.e., system topology, signal processing operations or both) to conserve battery power 206 using a variety of techniques without substantially degrading system performance. For example, since the front transducers (e.g., 24a-b, 24c-24d in FIG. 1A) consume power but do not appreciably affect system performance outside the rear of the vehicle, the system may be configured to shut off the front pair transducers when operating under battery power in open mode. Similarly, the rear transducers (28a-28b in FIG. 1A) may be shut off when operating in the conventional mode. Thus, it should be understood that the adjustment to signal processes to conserve power 206 may differ depending on the mode of operation of the audio system 20. By adjusting system configuration in order to conserve power when the battery monitoring process detects that the engine is not running, the system is able to extend the length of time it may operate under battery power.

Transducers may be shut off in a variety of ways, including by muting the output of the amplifier feeding a particular transducer, placing the amplifier in a standby mode (many commercially-available amplifier integrated circuits, such as the TDA 8567Q amplifier manufactured by Philips® Semiconductor, are configured with both mute and standby modes), reducing the audio signal fed into an amplifier to substantially zero, interrupting the signal path between an amplifier and a transducer, or removing power from an amplifier feeding a particular circuit or transducer.

Since a significant amount of power is concentrated in the low frequency portion of music, the system may the raise cutoff frequencies (or increase the order of attenuation as a function of frequency, or both) of high pass filters that may be located in the signal path of one or more of the signals delivered to the transducers in order to conserve power.

Power may also be conserved by reducing the magnitude of the voltage of the audio signal applied to one or more transducers. One technique for reducing the magnitude of the voltage is to reduce the gain in the signal path of the audio signal (which can be done by changing the gain of an amplifier, or the attenuation of a passive attenuator in analog implementations, or by changing coefficients in digital filters or digital multiplication operations in digital systems). Another technique for reducing the magnitude of the voltage of audio signals is through the use of a dynamic range control device in the signal path of the audio signal. A dynamic range control device is a device which limits, compresses, expands or otherwise changes the dynamic range of an audio signal.

One use of dynamic range control devices in audio systems is to keep a device (typically a power amplifier) from clipping its output. A dynamic range control device used in this type of application is commonly known as a limiter and is configured to keep the maximum voltage applied to the amplifier below a set minimum value under all operating conditions.

Dynamic range control devices are typically constructed using a variable gain element (such as an amplifier in an analog implementation or a multiplier in a digital implementation), a control element, and a signal detector of some type (typically a level detector to detect, peak, average or RMS level of a signal, although other types of detectors are also possible), where the gain of the variable gain element is varied as some function of the detected signal of interest by the control element. The function defines the relationship between the gain of the variable gain element and the detected quantity of the signal of interest. The nature of the function may change depending on the detected quantity, or may remain constant over the entire range of detected values. For example, a threshold value for the detected quantity may be determined, where the gain of the variable gain element is not changed as long as the detected quantity remains below the threshold value, but the gain is changed according to the specified function if the detected quantity exceeds the threshold level. Limiters work by reducing the gain of the variable gain element when the sensed parameter of the signal exceeds some set threshold value, which is usually chosen to allow maximum output of a device (such as a power amplifier) without clipping. Thus, in one embodiment the battery monitoring process may reduce the maximum voltage of an audio signal applied to one or more transducers by lowering the threshold value of a limiter when the battery monitoring process 200 detects that the audio system 20 is primarily running off of the battery.

Referring again to FIG. 3, the battery condition monitoring process 200 receives input 208 about various operating conditions of the battery and estimates the approximate amount of energy remaining in the battery, in order to ensure that there is sufficient charge remaining in the battery to re-start the automobile. If the estimated battery capacity reaches or falls below a predetermined threshold value 209, then the system 20 may notify the user that battery energy is getting low 210 and may take further power conservations measures 212.

The battery condition monitoring process 200 receives input 208 indicating various factors related to the current operating condition of the battery. These conditions may include the discharge current magnitude and rate, the accumulated time discharging has been occurring, the ambient temperature, battery output voltage, and other conditions that one skilled in the art might wish to monitor in order to estimate the remaining capacity of the battery. From these conditions, process 200 estimates the remaining capacity of the battery.

The voltage profile of a battery is the relationship between the battery output voltage and the discharge conditions (length of time the battery has been discharging, rate of discharge, magnitude of discharge current, and temperature). The output voltage of a secondary (re-chargeable) battery decreases over time according the discharge conditions. Batteries, like lead-acid batteries commonly used in automobiles, do not have a singular discharge curve over all operating temperatures and discharge currents. Rather, a particular battery's voltage profile curve is a function of the operating conditions described above. The set of battery voltage profile curves for a particular battery are readily available from the manufacturer. Manufacturers also provide curves showing battery capacity as a function of operating conditions. One technique for estimating the remaining capacity of the battery involves determining where the battery is operating on its appropriate discharge (profile) curve, given the (monitored) operating conditions. From this information and the capacity information available from the manufacturer, the remaining battery capacity can be estimated.

Another technique for estimating the remaining capacity of the battery is to estimate the state of charge of the battery by measuring how much energy is put into it during charging and how much energy is drained from it when it is in use. This is sometimes called coulomb counting. In a separate embodiment, a battery monitoring process may monitor the amount of current being discharged from the battery as well as the amount of current that charges the battery and, from these measurements, estimate the remaining charge in the battery.

When the estimated capacity reaches a predetermined value above the minimum level necessary for normal re-starting of the vehicle (which is set as the battery capacity threshold value), the battery condition monitoring process 200 will inform the user 210 by issuing an alarm, which can be audible (e.g., output through the audio system) or visual (e.g., on a visual display) or tactile (e.g., actuate a vibrating device such as a pager). In other separate embodiments, the battery condition monitoring process 200 may shut down the audio system or place the system in a standby (or sleep) mode in which all unnecessary components, including all amplifiers, are shut off when the estimated capacity reaches the battery capacity threshold value. Also, in a vehicle equipped with remote starting capability, a battery condition monitoring process may trigger the remote starting process to periodically start the vehicle to recharge the battery when the estimated capacity reaches the battery capacity threshold value.

In other separate embodiments, a battery condition monitoring process may have several predetermined thresholds which cause the system to take different power conservation measures (e.g., shutting off transducers, adjusting equalization, automatically starting the automobile, reducing the magnitude of voltage of the audio signals applied to a transducer, placing the system in a standby mode, shutting off the system, etc.) at different predetermined thresholds.

In another embodiment, an audio system may include a battery monitoring process which does not estimate the remaining capacity of the battery, but which monitors one or more operating conditions of the battery such as the discharge current, current drawn by the audio system, temperature, or the battery's voltage. The battery monitoring process which monitors the operating condition of the battery may take one or more actions, such as triggering an alarm, reducing power consumption, placing the system in a standby mode, or completely shutting down the system, if the operating condition of the battery reaches a predetermined state. The predetermined state may be the state of one or more of the monitored conditions such as the battery voltage, discharge current, and ambient temperature, or a combination of conditions.

It should be noted that any number of the known techniques for estimating the remaining capacity of a battery or monitoring the operating condition of a battery may be utilized in other embodiments and the invention is not limited to the particular embodiments described above.

In other separate embodiments, an audio system may raise the cut-off frequencies of the high pass filters, shut off transducers, limit the gain of the amplifiers, reduce the dynamic range of audio signals, or take other energy conservation measures either whenever operation on battery power is detected (as shown in FIG. 2A), or when remaining battery energy decreases to a predetermined threshold. It should be understood that a battery monitoring process may be implemented in a dual mode audio system (as in audio system 20 shown in FIG. 1A-1B) or in a purely conventional audio system.

The circuitry implementing the mode selection, battery condition monitoring processes, and system configurations 100, 200, 106, 112, 206, 210, 212 illustrated in FIG. 2A, FIG. 2B and FIG. 3 may be implemented in hardware, software, firmware or the like in one or more locations in the audio system 20. For example, the circuitry for all of the processes may be physically located in the front control console 21 or rear control console 22 (in FIG. 1 A) or the circuitry may be distributed across several devices of the system.

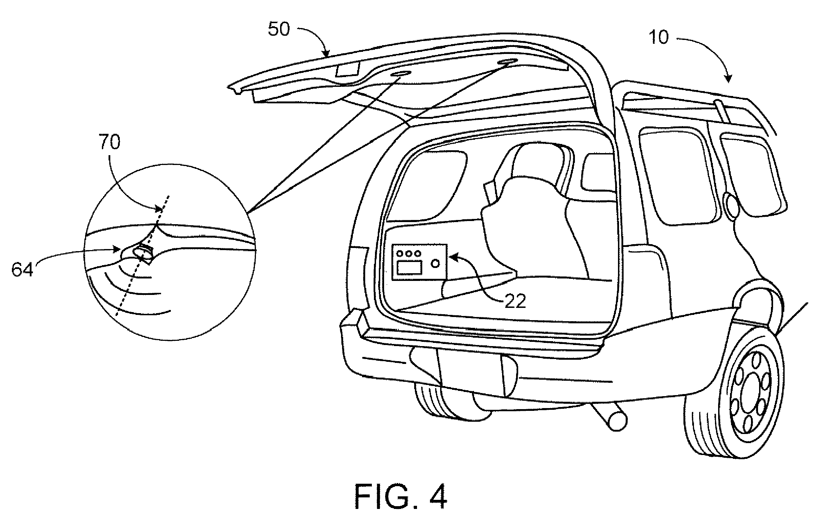

In a conventional vehicle audio system, the audio sources are typically located in front of the vehicle or at least a control interface for the audio sources is located in the front. When the audio system is operating in the open mode, for convenience, the audio sources or at least a set of controls for the audio sources can be accessible from the open tailgate (or door), which would normally be at the rear of the vehicle where the listeners are located. As shown in FIG. 4, a duplicate set of user controls in the rear console 22 is provided within the vehicle 10 cabin near the opening of the rear tailgate 50. This may be a complete set of duplicate controls, such as source selection, volume, and source transport controls (e.g., play, stop, pause, skip forward, skip backwards, fast forward, fast reverse, preset selection, tune up or down, etc.). Alternatively, the rear console may be some subset of the complete control interface present in the front of the vehicle. Additionally, FIG. 4 shows a set of transducers 64 mounted on the vehicle's tailgate 50 such that their primary axis of radiation 70 is directed at an angle of approximately 45 degrees relative to the plane of the ground on which the vehicle 10 sits when the tailgate 50 is opened, and the primary axis of radiation 70 substantially faces into the passenger compartment of the vehicle 10 when the tailgate 50 is closed.

An additional way of controlling the audio sources from the rear of the vehicle is to implement the control functions using a remote control. A separate remote control may be used, or audio system control functions could be integrated onto a vehicle key fob remote, similar to those for remote keyless entry. Using a key fob remote, a plurality of buttons can be added to the key fob to provide limited audio function controls such as volume and source selection. Alternatively, existing key fob remote buttons that operate normal functions such as lock and unlock with the vehicle operating in conventional mode, can be re-mapped to operate audio functions when the vehicle is operating in open mode. Re-mapping could occur by activating a switch, button, or a sequence of buttons to change the remote function from normal vehicle functions to audio system functions. For example, one method to do this is by adding a shift button that changes the functions of other buttons on the remote. Alternatively, the vehicle could sense the mode, and change its interpretation of the commands sent by the key fob remote. For example, lock and unlock could become volume up and down when the system was operating in open mode.

Additionally, one or more external audio system inputs may be provided in the rear of the vehicle. For example, one input may be optimized to accept the output of a microphone. In this case, additional pre-amplification (and possibly a separate volume control) may be required. This would allow the vehicle to be used as a portable public address system. A line level input may also be provided. This would allow additional sources, such as a portable MP3 or CD player, to be connected to the system and be easily accessible from the rear.

Other features may be included in a rear control panel. For example, when the vehicle is equipped with an integrated video source (DVD-video, VHS, etc), a video output jack can be made accessible from the rear of the vehicle, so a video display may be attached.

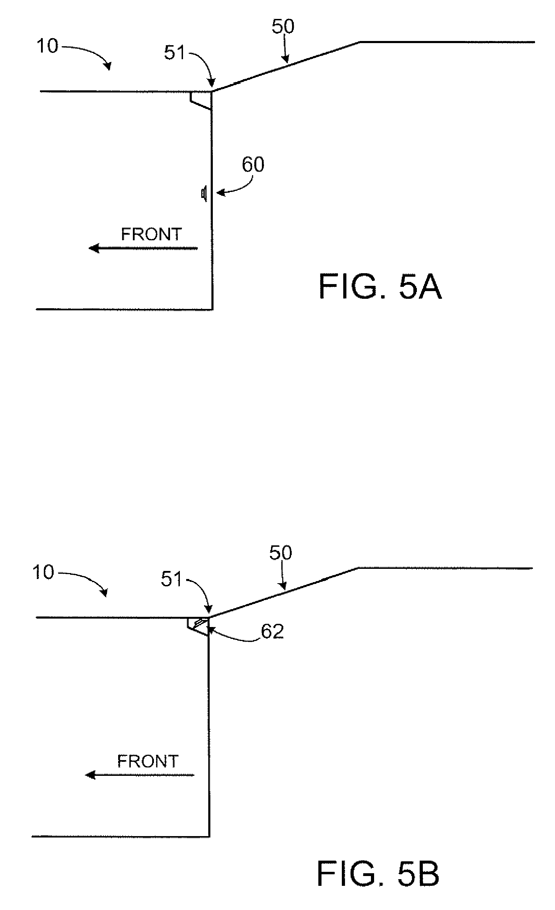

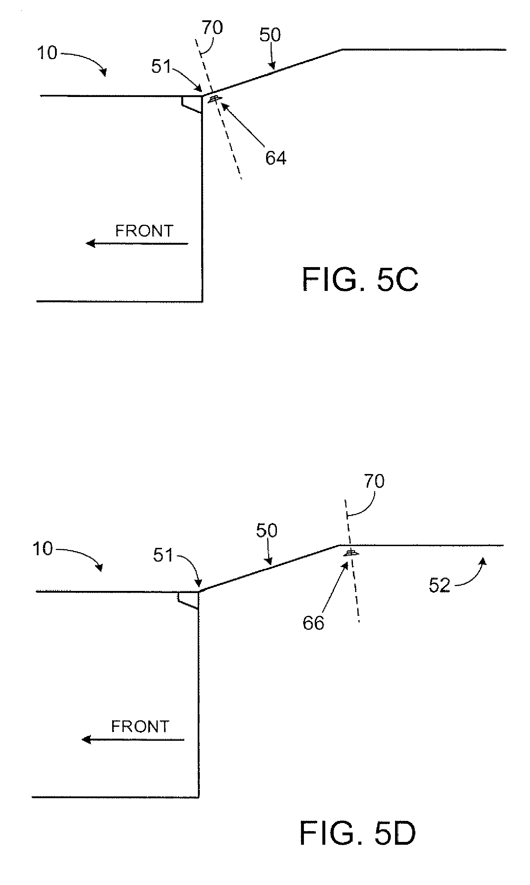

FIG. 5A-FIG. 5D illustrate several locations where rear transducers may be mounted in order to provide high quality sound for both modes of operation. It should be noted that the transducers illustrated in FIG. 5A-FIG. 5D may be upper frequency transducers (e.g., tweeters, mid-ranges), or may be substantially full range transducers (which radiate sound over the majority of the audible frequency range of the human auditory system). Additionally, although transducers 60, 62, 64, and 66 shown in FIGS. 5A, 5B, 5C, and 5D, respectively, are shown as individual transducers, it should be understood that the transducers may also be mounted within enclosures.

The primary axis of radiation of a transducer is the direction in which the transducer radiates maximum energy over the majority of its operating range. This direction is typically in line with physical center axis of symmetry of an axi-symmetric transducer. For ease of understanding, axi-symmetric transducers are assumed to be used here, and the axis of primary radiation is assumed to be aligned with the center axis of symmetry of the transducer and points away from the front surface of the primary radiating surface of the transducer, where the front surface is the surface that is coupled to the listening environment. It should be noted, however, that the invention is not limited to use of axi-symmetric transducers. The orientations described can be adjusted as needed such that sound radiation is directed in the desired directions.

As shown in FIG. 5A, an automobile 10 includes a rear tailgate 50 having an upper hinge 51 which is shown as open. A pair of rear transducers 60 (e.g., mid-range transducers) are mounted within the automobile cabin near the opening of the tailgate 50 such that the pair of transducers 60 are outwardly directed from the cabin when the tailgate 50 is opened. When the tailgate 50 is closed, sound from transducer pair 60 is reflected off of the tailgate back into the automobile cabin. There are numerous locations in the rear portion of the cabin of the automobile where transducers 60 may be mounted and the invention is not limited to the specific location illustrated in FIG. 5A. Additionally the transducer pair 60 may be oriented such that they do not point directly at the tailgate 50 when the tailgate is closed, but may be angled with respect to the tailgate 50. For example, in separate embodiments, transducer pair 60 may be mounted on the cabin floor, cabin ceiling, cabin sidewalls, rear cabin deck, or back of the rearmost seat in the automobile 10. Finally, an additional transducer, such as a subwoofer, may also be mounted within the passenger compartment near the tailgate.

FIG. 5B and FIG. 5C illustrate additional separate embodiments of where pairs of rear transducers may be mounted on an automobile 10 having a tailgate 50. Specifically, FIG. 5B shows a pair of rear transducers 62 mounted within the automobile cabin near the top hinge 51 of the tailgate 50.

FIG. 5C shows a pair of rear transducers 64 mounted on the tailgate 50 such that the left transducer is located in the upper left-hand side of the tailgate and a right transducer is located in the upper right-hand side of the tailgate. The transducers 64 may be mounted within the trim of the tailgate 50. The transducers may also be mounted on a window on the tailgate 50 using methods similar to those used to attach a rear view mirror to a front windshield. The window mounted transducers may additionally be attached to the trim surrounding the window for additional structural support. The rear transducers 64 can also be oriented such that the primary axis of radiation 70 of the transducers 64 face substantially towards the rear of the automobile 10 and are angled at an angle of approximately 45 degrees relative to a plane parallel to the ground when the tailgate is open. Similarly, the primary axis of radiation 70 of the transducers 64 is pointed substantially towards the passenger cabin when the tailgate is closed. This transducer orientation may be particularly advantageous because it directs sound into the vehicle when the tailgate is closed and also outwardly directs sound from the vehicle when the tailgate is open. Thus, this transducer orientation is particularly well-suited for accommodating both modes of operation of the audio system.

FIG. 5D shows another pair of rear transducers 66 mounted on the tailgate 50 approximately midway between the upper hinge 51 and lower edge 52 of the tailgate 50. While this transducer orientation is well-suited for operation in the conventional mode of operation because sound is directed into the passenger cabin when the tailgate is closed, this orientation may not be optimal for listeners that are located behind the automobile 10, away from the tailgate, as these listeners will be significantly off-axis to the main axis of radiation of the transducers 66.

While FIG. 5A-FIG. 5D illustrate various locations of a single pair of rear transducers, additional separate embodiments may include audio systems where multiple pairs of rear transducers are mounted at multiple locations in automobile cabin and tailgate. Additionally, note that transducers 60, 62, 64, and 66 shown in FIG. 5A, 5B, 5C and 5D, respectively, represent a pair of transducers symmetrically located within the automobile, where the axis of symmetry is the centerline of the automobile 10.

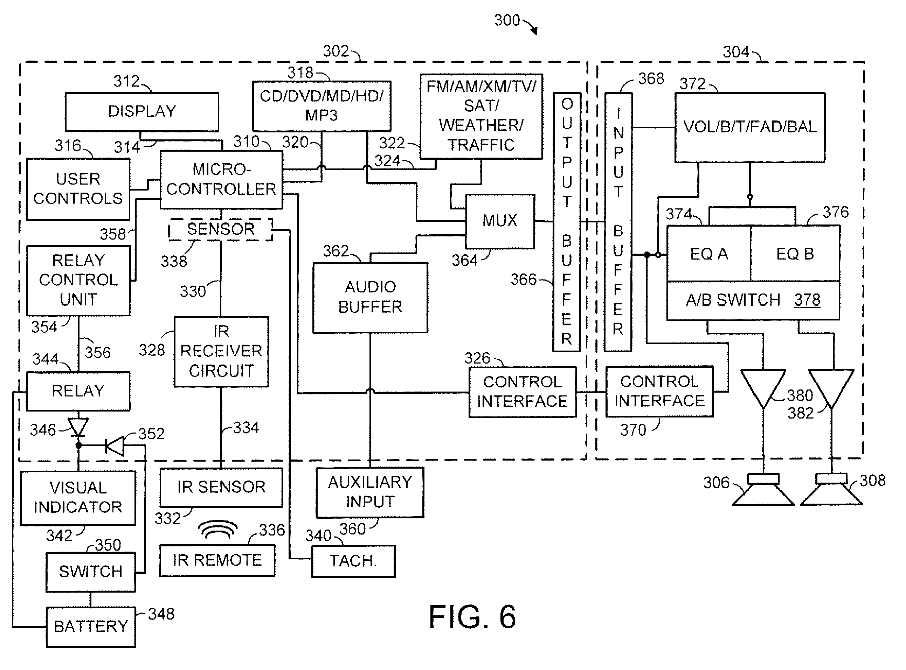

FIG. 6 illustrates a block diagram of an audio system 300 according to the invention. The audio system 300 includes an audio source 302 and a controller 304. The controller 304 can be an amplifier. The audio source 302 generates an audio signal. The controller 304 modifies the audio signal. For example, in a first system configuration, the controller 304 can route the audio signal to a first plurality of transducers 306. The first plurality of transducers 306 corresponds to the audio system 300 operating in the conventional mode. The controller 304 can also modify the audio signal by adjusting signal processing operations, such as equalization parameters of the audio signal and/or amplifying the audio signal. Skilled artisans will appreciate that the partitioning between the audio source 302 and the controller 304 shown in FIG. 6 is an illustrative embodiment. Various elements in the audio source 302 and the controller 304 can be moved and/or modified. In one embodiment, the controller 304 is integrated with the audio source 302.

In a second system configuration, the controller 304 can route the audio signal to a second plurality of transducers 308. The second plurality of transducers 308 corresponds to the audio system 300 operating in the open mode. In one embodiment, the first plurality of transducers 306 is the same as the second plurality of transducers 308 and the signal processing operations, (e.g., equalization parameters of the audio signal) are modified depending on the mode of operation. For example, the equalization parameters of the audio system 300 in the first system configuration can be different than the equalization parameters of the audio system 300 in the second system configuration.

The audio source 302 includes a micro-controller 310. The micro-controller 310 is coupled to a display 312 through an electrically conductive path 314. The display 312 can be any suitable display such as a liquid crystal display (LCD), a light emitting diode (LED) display, a plasma display, or a cathode ray tube (CRT) display. The display can indicate the status of the audio system 300, including but not limited to the status of the audio source, the operating mode of the system (e.g., conventional mode or open mode, in a dual mode system), and/or additional information, such as the frequency band or the title of an audio track, for example. The micro-controller 310 can also be coupled to a set of user controls 316 that control the audio system 300. For example, the user controls 316 can be buttons, switches, knobs, a microphone, a keypad, or any other suitable control mechanism. In one embodiment, the display 312 is a touch-screen display and the user controls 316 are soft-keys in the touch-screen display. The user controls 316 can be used to select the mode of operation, such as the conventional mode or the open mode based on a user input.

The micro-controller 310 is also coupled to one or more sources 318 of audio data such as compact disk (CD), digital video disk (DVD), mini disk (MD), hard disk (HD), and/or MPEG1, layer 3 (MP3). The sources 318 of audio data are controlled by the micro-controller 310 through a transmission path 320. The transmission path 320 can be a bus, such as a GPIO bus, a RS232 bus, a SCSI bus, a serial bus, a parallel bus, a fibre channel bus, an optical bus, a CAN bus, a MOST bus, or any other suitable communication method for transmitting control information. In one embodiment, the transmission path 320 can transmit data as well as control information.

The micro-controller 310 is also coupled to one or more tuners 322. The tuners 322 can include an amplitude modulated (AM) tuner, a frequency modulated (FM) tuner, a television (TV) tuner, a XM tuner, and a satellite tuner. The tuners 322 are controlled by the micro-controller 310 through a transmission path 324. The transmission path 324 can be a bus, such as a GPIO bus, a RS232 bus, a SCSI bus, a serial bus, a parallel bus, a fibre channel bus, an optical bus, a CAN bus, a MOST bus, or any other suitable communication method for transmitting control information.

The micro-controller 310 is also coupled to the controller 304 through a control interface 326. One or more functions of the controller 304 are controlled by the micro-controller 310. For example, in response to a user input, the micro-controller 310 can transmit a command to the controller 304 to select the first system configuration or the second system configuration. The micro-controller 310 can also transmit commands to the controller 304 to adjust a set of signal processing operations, such as equalization parameters in the first and/or the second system configuration.

An infrared (IR) receiver circuit 328 is coupled to the micro-controller 310 through a transmission path 330. The IR receiver circuit 328 is coupled to an IR sensor 332 through a transmission path 334. Alternatively, the IR sensor 332 can be integrated with the IR receiver circuit 328. The IR sensor 332 receives IR signals from a remote control transmitter 336. The remote control transmitter 336 can control various functions of the audio system 300 and/or the vehicle. For example, the remote control transmitter 336 can select the system configuration, select a source (e.g., CD, stereo radio, DVD, etc.), control a volume, control an equalization function, control a tuning function, select a band, select a track, control a seek function, control a scan function, control a fast forward function, control a rewind function, control a skip forward function, control a skip back function, control a fader function, control a balance function, and/or control any other function of the audio system 300. In an embodiment including a video source, the remote control transmitter 336 can control functions of the video source, such as chapter select, search, skip, fast forward, rewind, zoom, pause, etc. The remote control transmitter 336 can also control functions related to the vehicle. For example, the remote control transmitter 336 can control a door lock, a vehicle ignition, a window, a power door, a power seat, a power moon roof, a convertible top, a courtesy light, a vehicle alarm, vehicle telematics, a communication system, a trunk lid, a suspension load leveling system, or any other desired function, such as controlling a climate setting with a heater, an air conditioner, or a defroster, in the vehicle. The remote control transmitter 336 can also be used to control systems that are external to the vehicle, such as a garage door opener, electric gate, lights, appliances, or a home security system, for example. In one embodiment, the functions of the remote control transmitter 336 are user programmable.

Skilled artisans will appreciate that other types of remote control transmitters and receivers could be used in the audio system 300. For example, a radio-frequency (RF) transmitter and a RF receiver could be used instead of the IR remote control transmitter 336 and IR receiver circuit 328. In one embodiment, each audio system 300 can include a remote control transmitter that transmits a unique transmitter signal such that no two transmitters can control the same audio system 300. In other embodiments, the audio system 300 can include a remote control transmitter having transmitter codes that are user selectable. Various techniques for programming communication protocols between remote control transmitters and remote control receivers can be used.

In one embodiment, a sensor 338 is coupled between the micro-controller 310 and the IR receiver circuit 328. The sensor 338 can be used to disable the IR receiver circuit 328 in specific situations. For example, the IR receiver circuit 328 can be disabled when the vehicle is in motion. This can prevent the second system configuration corresponding to the open mode from being inadvertently selected while the vehicle is moving. In this embodiment, the sensor 338 can be coupled to a tachometer 340 in the vehicle to sense a state of the engine. Alternatively, the sensor can be coupled to a speedometer in the vehicle to sense a speed of the vehicle. In another example, the sensor 338 can be coupled to a parking brake in the vehicle to sense a state of the parking brake. The sensor 338 can be coupled to any combination of these, or can be coupled to other systems in the vehicle that indicate that the vehicle is moving. For example, in one embodiment, audio system 300 obtains the status of the vehicle through a vehicle data bus (not shown) that is integrated into the electrical system of the vehicle.

A selection of the second system configuration can also be disabled in various other ways including manually disabling the selection of the second system configuration through a head unit in the audio system 300 or through a switch coupled to the audio system 300. In another embodiment, the selection of the second system configuration can be disabled automatically by closing a door, a window, a tailgate, a hatch, a moon roof, a sunroof, a convertible top, a trunk, and/or a storage bin on the vehicle.

The selection of the second system configuration can be automatically enabled by opening a door, a window, a tailgate, a hatch, a moon roof, a sunroof, a convertible top, a trunk, and/or a storage bin on the vehicle. Alternatively, the selection of the first system configuration can be automatically enabled by closing a door, a window, a tailgate, a hatch, a moon roof, a sunroof, a convertible top, a trunk, and/or a storage bin on the vehicle. There are various other methods that can be used for selecting the first or the second system configuration. For example, the selection of the second system configuration can be made by operating a switch. The switch can be a manual switch, an automatic switch, a sensor, a remote control switch, a switch that is integrated with the audio source 302, and/or a switch that is integrated with the controller 304.

The audio system 300 can also include a visual indictor 342 that is coupled to the audio source 302 and/or the controller 304. The visual indicator 342 visually indicates when the second system configuration is selected. The visual indicator 342 can be a brake light, a lamp, a light emitting diode (LED), a strobe, a parking light, a directional light, a reverse light, and/or any other visual indicator.

The visual indicator 342 can be coupled to a relay 344 through a diode 346. In one embodiment, the relay 344 powers the visual indicator 342 using the battery 348 from the vehicle. In the case in which a brake light shares functionality with the visual indicator 342, a switch 350 that is coupled to the brake pedal is connected via diode 352 and the relay 344 is coupled via diode 346 to protect each circuit. Skilled artisans will appreciate that various other arrangements can also be used.

The relay 344 is coupled to a relay control unit 354 through a transmission path 356. The relay control unit 354 is coupled to the micro-controller 310 through a transmission path 358. The micro-controller 310 instructs the relay control unit 354 to activate the visual indicator 342 when the second system configuration is selected.

The audio system 300 can also include at least one auxiliary input 360. The auxiliary input 360 can be used to couple an auxiliary or external device to the audio source 302. The auxiliary input 360 can be a line level input, for example. The auxiliary device can be a radio, a television, a XM tuner, a SAT tuner, a CD player, a DVD player, a cassette player, a MP3 player, a hard drive, a mini-disk (MD) player, a personal digital assistant (PDA), a video player, a portable audio player, a microphone and/or a musical instrument. Other devices, such as a karaoke machine, a turntable, and/or a drum machine can also be coupled to the auxiliary input 360. The auxiliary input 360 is coupled to an audio buffer 362 in the audio source 302. The audio buffer 362 is generally referred to as an impedance buffer. The audio buffer 362 is coupled to a multiplexer 364.

The multiplexer 364 is configured to receive audio input from the sources 318 of audio data, the tuners 322 and the auxiliary input 360. The multiplexer 364 transmits the selected audio data to an output buffer 366. The output buffer 366 is an impedance buffer.

The controller 304 includes an input buffer 368 that is coupled to the output buffer 366. The controller 304 also includes a control interface 370 that is coupled to the control interface 326 in the audio source 302. The control interface 370 receives commands from the micro-controller 310. The commands control various functions of the controller 304. For example, the micro-controller 310 can command the controller 304 to adjust various parameters 372 of the audio signal generated by the audio source 302 such as the volume, the bass level, the treble level, the fader, and the balance.

The controller 304 can include amplification circuitry having multiple channels and switching circuitry to switch different channels on and off. In one embodiment, the controller 304 includes at least two blocks EQ A 374 and EQ B 376 of equalization processing circuitry, which can include a plurality of individual channels. The controller 304 can include any desired number of blocks of equalization processing circuitry or other signal processing circuitry that can configure an audio signal depending on the configuration of the audio system 300. The first equalization block 374 corresponds to the first system configuration and configures the audio signal with a first set of signal processing operations. The second equalization block 376 corresponds to the second system configuration and configures the audio signal with a second set of signal processing operations. For example, the audio signal in the first system configuration can require a different set of equalization parameters than the audio signal in the second system configuration. An A/B switch 378 switches the audio system 300 between the first and the second system configuration. Although this example illustrates two system configurations, the audio system 300 can support any desired number of system configurations.

The outputs of the A/B switch 378 are coupled to power amplifiers 380, 382. The first power amplifier 380 is coupled to the first plurality of transducers 306. The second power amplifier 382 is coupled to the second plurality of transducers 308. It should be noted that the power amplifiers 380, 382 can include multiple channels, each of which can be coupled to one or more transducers in the first 306 and the second plurality of transducers 308.

In another embodiment, the system is implemented using a programmable filter structure (not shown) in which different equalization parameters are applied to different signals depending on the system configuration, instead of blocks of equalization circuitry that are switched "in" and "out" depending on the system configuration.

In one embodiment, the first 306 and the second plurality of transducers 308 can each include at least one common transducer. For example, the first 306 and the second plurality of transducers 308 can include the same transducers. In this embodiment, the signal processing operations, such as the equalization parameters from the two channels of equalization circuitry 374, 376 can be different between the first system configuration and the second system configuration.

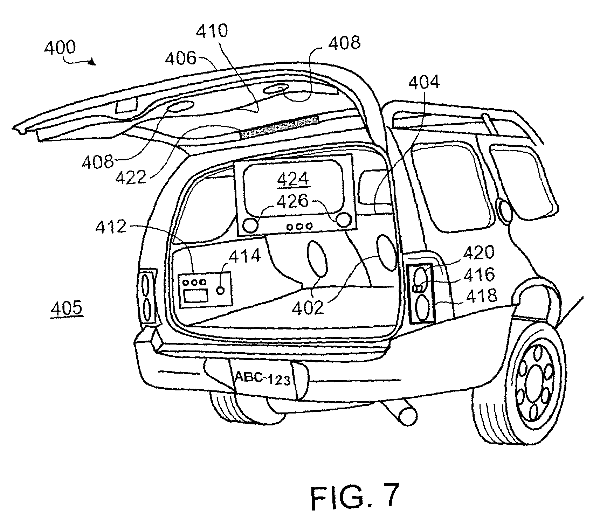

FIG. 7 illustrates a perspective view of a vehicle 400 including an embodiment of the audio system 300 of FIG. 6. The audio system 300 includes a pair of transducers 402 that are mounted to the rear seats 404 of the vehicle 400. The pair of transducers 402 is positioned so that the primary axis of radiation of each of the transducers 402 is facing toward to rear of the vehicle 400. In this embodiment, each of the transducers 402 radiate maximum energy over a majority of the operating range of the transducers 402. The energy is directed to an area 405 behind the vehicle 400 when the tailgate 406 is in the open position. Another pair of transducers 408 can be positioned on an interior-facing panel 410 of the tailgate 406. The primary axis of radiation of the pair of transducers 408 is directed inside the passenger compartment when the tailgate 406 is in the closed position and is directed to the area 405 behind the vehicle 400 when the tailgate is in the open position.

The vehicle 400 also includes a control panel 412 that is located in the interior of the vehicle 400 near the tailgate 406. The control panel 412 can include user controls, such as control knobs, a push buttons, and/or a keypad that can control the audio system. The control panel 412 can also include an auxiliary input 414, such as an auxiliary jack for coupling an auxiliary source to the audio system. The auxiliary sources can be a radio, a television, a XM tuner, a SAT tuner, a CD player, a DVD player, a cassette player, a MP3 player, a MD player, a PDA, a video player, a hard drive, a portable audio player, a microphone and/or a musical instrument.

The audio system 300 includes the remote control receiver 328 described with reference to FIG. 6. An infrared (IR) sensor 416 is coupled to the remote control receiver 328. In one embodiment, the IR sensor 416 is located in a tail light assembly 418 on the vehicle 400. For clarity, the IR sensor 416 is not drawn to scale. A tail light assembly can be the left and right tail light/directional light assemblies, the reverse light assemblies, a license plate illuminator assembly, a running light assembly, a courtesy light, or the high-level brake light assembly, for example. In some embodiments, the IR sensor 416 is mounted in a head light assembly, a fog light assembly or any other exterior light assembly. The sensor 416 can also be located in exterior mirror assemblies, such as side view mirror assemblies. The IR sensor 416 receives signals from the IR remote control transmitter 336 (FIG. 6). The signals are transmitted to the remote control receiver 328 and direct the remote control receiver 328 to control functions of the audio system 300 as previously described. The functions can include selecting a system configuration, selecting a source, controlling a volume, controlling an equalization function, controlling a tuning function, selecting a band, selecting a track, controlling a seek function, controlling a scan function, controlling a fast forward function, controlling a rewind function, controlling a skip forward function, controlling a skip back function, controlling a fader function, and controlling a balance function of the audio system 300.

The IR remote control transmitter 336 can also be used to control functions of the vehicle 400 such as opening a door lock, activating a vehicle ignition, opening or closing a window, opening or closing a power door, moving a power seat, opening or closing a power moon roof, operating a convertible top, activating a courtesy light, and activating or deactivating a vehicle alarm in the vehicle 400. The remote control transmitter 336 can also be used to control systems that are external to the vehicle, such as a garage door opener, electric gate, lights, appliances, or a home security system, for example. In an embodiment including a video source, the remote control transmitter 336 can control functions of the video source, such as chapter select, search, skip, fast forward, rewind, zoom, pause, etc.

The IR sensor 416 can be mounted to a body panel of the vehicle 400 or within the tail light assembly 418. The red colored lens 420 of the tail light assembly 418 can provide an ambient light filter for the IR sensor 416. Additionally, the tail light assembly 418 can include a curved reflector, such as a parabolic mirror that is used to defocus and reflect light out of the tail light assembly 418. This parabolic mirror can be used to focus signals from the IR remote control transmitter 336 onto the IR sensor 416. This focusing feature can improve the distance range of the IR transmitter 336. Additionally, the focusing feature can improve the peripheral range of the IR transmitter 336.

In one embodiment, the audio system 300 includes a visual indicator 422. The visual indicator 422 can be used to indicate when the system is operating in the open mode previously described. The visual indicator 422 can be the high level brake light as shown in FIG. 7. However, the visual indicator 422 can also be a different brake light, a lamp, a light emitting diode (LED), a strobe, a parking light, a directional light, a reverse light, or any other suitable visual indicator. In one embodiment, the visual indicator 422 can also indicate the operation of the auxiliary input.

The vehicle 400 can include a video display 424 that can be attached to a headliner in the vehicle 400. The video display 424 can also include a pair of transducers 426. The transducers 426 can be configured to output a center channel audio signal to align the video image from the video display 424 with the audio output. The video display 424 can be positioned so that the video image is viewable to viewers in the listening area 405 outside of the vehicle. The video display 424 can also be re-positioned such that passengers in the vehicle can view the display when the tail gate 406 is in the closed position. The video display 424 can include any suitable video display such as a liquid crystal display (LCD), a light emitting diode (LED) display, a plasma display, a projection display, or a cathode ray tube (CRT) display.

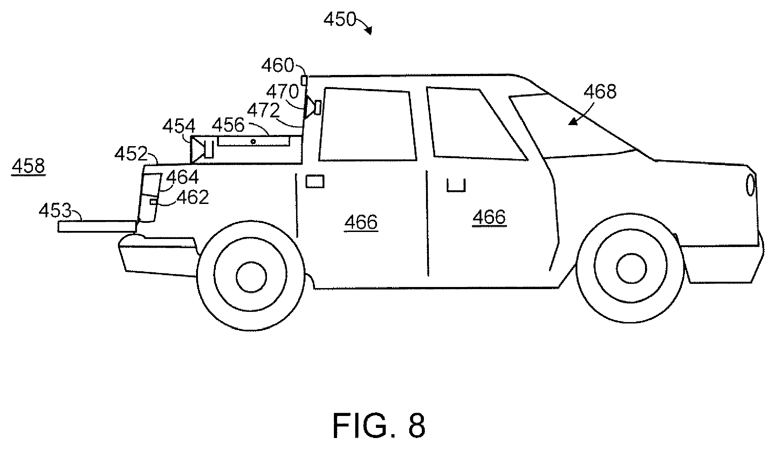

FIG. 8 illustrates a side view of a vehicle 450 including an embodiment of the audio system 300 of FIG. 6. The vehicle 450 includes a pickup bed 452 having a tailgate 453. One or more transducers 454 are positioned in the pickup bed 452. In one embodiment, the transducers 454 are mounted in a storage bin 456 that is mechanically coupled to the pickup bed 452. The transducers 454 can be oriented such that their primary axis of radiation is facing toward to rear of the vehicle 450. In this embodiment, the transducers 454 radiate maximum energy over a majority of their operating range to an area 458 behind the vehicle 450 when the second system configuration is selected and the system is operating in the open mode.

The vehicle 450 also includes a visual indicator 460, which can be a high level brake light, for example. The visual indicator 460 can indicate when the second system configuration is selected and the system is operating in the open mode. The audio system 300 can also include an infrared sensor 462 that is mounted in a tail light assembly 464 of the vehicle 450.

In the embodiment shown in FIG. 8, it is not necessary to open a door 466 or the tailgate 453 in the vehicle 450 in order to operate in the open mode. The audio system can transition to the second system configuration in response to a user input, since the transducer 454 is positioned in a location that is external to the passenger compartment 468 of the vehicle 450. In another embodiment, a transducer 470 can be mounted to a body panel 472 of the vehicle 450. In this embodiment, the transducer 470 is oriented such that its primary axis of radiation is facing toward to rear of the vehicle 450. Other locations on and around the vehicle 450 that are external to the passenger compartment 468 can also be used to mount the transducers 454, 470.

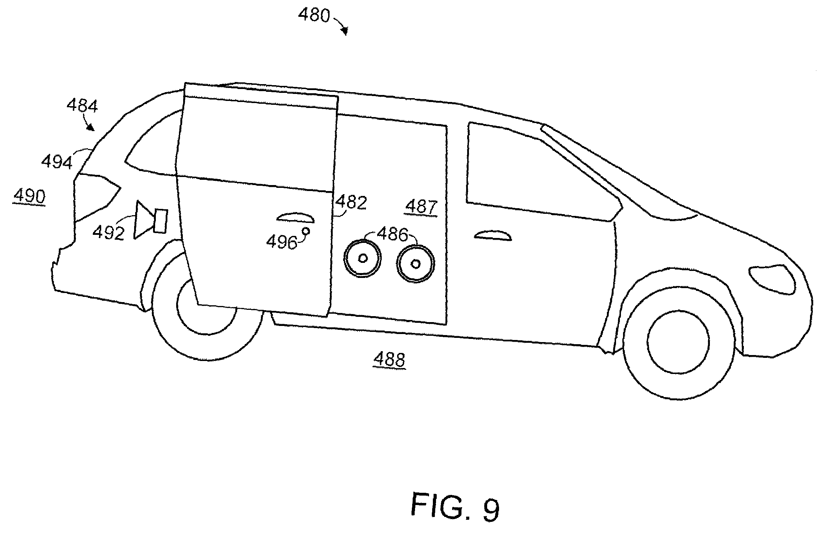

FIG. 9 illustrates a side view of a vehicle 480 including an embodiment of the audio system 300 of FIG. 6. The vehicle 480 is a minivan-type vehicle having at least one side door 482 that slides open towards the rear 484 of the vehicle 480. The vehicle 480 includes at least one transducer 486 that is positioned in the passenger compartment 487 so that its primary axis of radiation is directed to a listening area 488 that is outside of the vehicle 480 when the side door 482 is in the open position.

Other embodiments can be realized with transducers being positioned so that the primary axis of radiation of each of the transducers is directed to a listening area that is outside the vehicle 480. For example, if a listening area 490 is located behind the rear 484 of the vehicle 480, the primary axes of radiation of the transducers 486 are not directed towards the listening area 490. However, another transducer 492 is positioned in the vehicle 480 such that its primary axis of radiation is directed to the listening area 490 that is outside of the vehicle 480 when a rear door 494 of the vehicle 480 is in the open position. Although this embodiment is shown with an open side door 482 leading to the listening area 488, the system can be also used with windows, moon roofs, or any opening in the passenger compartment 487 of the vehicle 480.

The infrared sensor 496 is mounted to the side door 482 of the vehicle 480. In some embodiments, multiple infrared sensors can be mounted at various positions around the vehicle 480 depending upon the specific location of the listening area.

The audio system 300 (FIG. 6) can be configured in at least two different configurations. In a first configuration, the audio system 300 is operated in the conventional mode. This mode is characterized by a first set of signal processing operations that are configured for listening to the audio system 300 in the passenger compartment 487 of the vehicle 480. The audio system 300 uses a first plurality of transducers in the conventional mode of operation. The first plurality of transducers can be positioned at various locations in the passenger compartment 487.

In a second configuration, the audio system 300 is operated in the open mode. This mode is characterized by a second set of signal processing operations that are configured for listening to the audio system 300 in a listening area 488, 490 that is external to or outside of the passenger compartment 487 of the vehicle 480. The audio system 300 uses a second plurality of transducers in the open mode of operation. The second plurality of transducers can be positioned at various locations inside the passenger compartment 487 and/or external to the passenger compartment 487.

In one embodiment, the first and the second plurality of transducers include at least one common transducer. In other embodiments, the first and the second plurality of transducers include unique transducers. The audio system 300 can be configured such that at least one of the transducers in the second plurality of transducers has its primary axis of radiation directed outside of the passenger compartment 487of the vehicle 480.

A number of embodiments have been described, however, it is evident that those skilled in the art may make numerous modifications of the departures from the specific apparatus and techniques disclosed herein without departing from the inventive concepts. Consequently, the invention is to be construed as embracing each and every novel feature and novel combination of features present in or possessed by the apparatus and techniques disclosed herein and limited solely by the spirit and scope of the appended claims.

## Claims

1. An audio system for a vehicle, comprising:
a) an audio source that generates an audio signal;
b) a controller that is coupled to the audio source, the controller modifying the audio signal with one of a first and a second signal processing operation in response to a user input, the first signal processing operation configuring the audio signal for listening inside the vehicle and the second signal processing operation configuring the audio signal for listening outside the vehicle;
c) a first plurality of transducers that is coupled to the controller, the first plurality of transducers being driven by the audio signal that is configured for listening inside the vehicle by the first signal processing operation; and
d) a second plurality of transducers that is coupled to the controller, the second plurality of transducers being driven by the audio signal that is configured for listening outside the vehicle by the second signal processing operation.

2. The audio system of claim 1, wherein at least one transducer in the second plurality of transducers is positioned in a location that is external to a passenger compartment of the vehicle.

3. The audio system of claim 2, wherein the at least one transducer is mounted in a body panel on the vehicle.

4. The audio system of claim 2, wherein the at least one transducer is mounted to a storage bin that is mechanically coupled to the vehicle.

5. The audio system of claim 1, wherein the first and the second plurality of transducers comprises at least one common transducer.

6. The audio system of claim 1, wherein the first signal processing operation comprises a different equalization parameter than the second signal processing operation.

7. The audio system of claim 1, further comprising a visual indicator that indicates that the audio signal is driving the second plurality of transducers.

8. The audio system of claim 7, wherein the visual indicator is chosen from the group comprising a brake light, a lamp, a light emitting diode (LED), a strobe, a parking light, a directional light, and a reverse light.

9. The audio system of claim 1, wherein the controller comprises an amplifier.

10. The audio system of claim 1, wherein the controller is integrated with the audio source.

11. The audio system of claim 1, wherein at least one of the first and the second signal processing operations substantially attenuates the audio signal.

12. The audio system of claim 1, wherein the audio source further comprises an auxiliary input terminal for coupling an auxiliary device to the audio source.

13. The audio system of claim 12, wherein the auxiliary device is chosen from the group comprising a radio, a television, a XM tuner, a SAT tuner, a CD player, a DVD player, a cassette player, a MP3 player, a MD player, a hard drive, a PDA, a video player, a portable audio player, a microphone, and a musical instrument.

14. The audio system of claim 12, further comprising a visual indicator that indicates that the auxiliary device is coupled to the audio source.

15. The audio system of claim 1, wherein the user input is chosen from the group comprising opening at least one of a door, a window, a tailgate, a hatch, a moon roof, a sunroof, a trunk, and a storage bin on the vehicle.

16. The audio system of claim 1, wherein the user input comprises operating a switch.

17. The audio system of claim 16, wherein the switch comprises at least one of a manual switch, an automatic switch, a sensor, a remote control switch, a switch that is integrated with the audio source, and a switch that is integrated with the controller.

18. The audio system of claim 1, further comprising an amplifier that controls at least one of a gain and an equalization of the audio signal.

19. The audio system of claim 1, wherein the controller is coupled to the audio source through at least one of a GPIO bus, a RS232 bus, a SCSI bus, a serial bus, a parallel bus, a fibre channel bus, an optical bus, a CAN bus, and a MOST bus.

20. The audio system of claim 1, wherein the audio source comprises at least one of an AM tuner, an FM tuner, a TV tuner, a XM tuner, a SAT tuner, a CD player, a DVD player, a cassette player, a MP3 player, a MD player, a video player, and a hard drive.

21. The audio system of claim 1, further comprising a video display that is coupled to the audio source.

22. The audio system of claim 21, wherein the video display is configured to direct a video image outside the vehicle.

23. The audio system of claim 21, wherein the video display is chosen from the group comprising a liquid crystal display (LCD), a light emitting diode (LED) display, a plasma display, a projection display, and a cathode ray tube (CRT) display.

24. The audio system of claim 1, wherein the audio signal comprises one of a stereo audio signal, a matrix surround sound audio signal, a 5.1 surround sound audio signal, a 6.1 surround sound audio signal, a 7.1 surround sound audio signal, and a two-channel down-mixed audio signal.

25. The audio system of claim 1, wherein at least one of the first and the second plurality of transducers comprises a pair of transducers and the audio source provides complete surround information to the pair of transducers.

26. The audio system of claim 25, wherein the surround information is mixed prior to being provided to the pair of transducers.

27. The audio system of claim 1, further comprising a remote control receiver.

28. The audio system of claim 27, wherein a remote control sensor that is coupled to the remote control receiver is located in a tail light assembly on the vehicle.

29. The audio system of claim 27, wherein the remote control receiver comprises one of an infrared (IR) receiver and a radio-frequency (RF) receiver.

30. The audio system of claim 27, wherein the remote control receiver is disabled when the vehicle is in motion.

31. The audio system of claim 30, further comprising a sensor that is coupled to a tachometer in the vehicle, the sensor detecting a state of the engine in the vehicle.

32. The audio system of claim 30, further comprising a sensor that is coupled to a parking brake in the vehicle, the sensor detecting a state of the parking brake in the vehicle.

33. The audio system of claim 1, wherein the audio source determines a status of the vehicle from a vehicle communication bus.

34. The audio system of claim 27, further comprising a remote control transmitter that communicates with the remote control receiver.

35. The audio system of claim 34, wherein the remote control transmitter comprises a unique transmitter signal.

36. The audio system of claim 34, wherein the remote control transmitter controls at least one of a door lock, a vehicle ignition, a window, a power door, a power seat, a power moon roof, a trunk lid, a communication system, a courtesy light, and a vehicle alarm in the vehicle.

37. The audio system of claim 34, wherein the remote control transmitter controls at least one of a system configuration, a source selection, a volume, an equalization function, a tuning function, a band selection, a track selection, a seek function, a scan function, a fast forward function, a rewind function, a skip forward function, a skip back function, a fader function, and a balance function of the audio source.

38. The audio system of claim 34, wherein the remote control transmitter controls at least one of a garage door opener, an electric gate, a light, an appliance, and a home security system.

39. The audio system of claim 1, further comprising a battery monitor that monitors a state of a battery in the vehicle.

40. An audio system for a vehicle, comprising:
a) an audio source that generates an audio signal, the audio source being integrated with the vehicle;
b) a remote control receiver that is coupled to the audio source, the remote control receiver controlling a function of the audio source; and
c) a remote control sensor that receives a signal from a remote control transmitter to direct the remote control receiver to control the function of the audio source, the remote control sensor being positioned in a location that is external to the passenger compartment of the vehicle.

41. The audio system of claim 40, wherein the remote control sensor is mounted in an exterior light assembly.

42. The audio system of claim 41, wherein the exterior light assembly is chosen from the group comprising a left tail light assembly, a right tail light assembly, a left directional light assembly, a right directional light assembly, a parking light assembly, a reverse light assembly, a license plate illuminator assembly, a high-level brake light assembly, a courtesy light assembly, a running light assembly, a head light assembly, and a fog light assembly.

43. The audio system of claim 41, wherein the exterior light assembly comprises a curved reflector that focuses the signal from the remote control transmitter.

44. The audio system of claim 40, wherein the remote control sensor is one of an infrared (IR) sensor and a radio-frequency (RF) sensor.

45. The audio system of claim 40, wherein the remote control sensor is mounted to a body panel of the vehicle.

46. The audio system of claim 40, wherein the function comprises at least one of a system configuration selection, a source selection, a volume, an equalization function, a tuning function, a band selection, a track selection, a seek function, a scan function, a fast forward function, a rewind function, a skip forward function, a skip back function, a fader function, and a balance function of the audio source.

47. The audio system of claim 40, wherein the remote control transmitter controls at least one of a door lock, a vehicle ignition, a heater, an air conditioner, a defroster, a window, a power door, a power seat, a power moon roof, a convertible top, a courtesy light, vehicle telematics, a communication system, a trunk lid, a suspension load leveling system, and a vehicle alarm in the vehicle.

48. The audio system of claim 40, wherein the remote control receiver is disabled when the vehicle is in motion.
